# EUROPÄISCHE PATENTSCHRIFT

(11) **EP 2 134 925 B1**
(45) Veröffentlichungstag und Bekanntmachung des Hinweises auf die Patenterteilung: **05.01.2011**
(21) Anmeldenummer: 08735923.8
(22) Anmeldetag: 08.04.2008
(51) Int. Cl.: F01D 9/02, F02C 6/12, F02B 37/12

(54) **ABGASTURBOLADER UND VERFAHREN ZU DESSEN BETREIBEN**
EXHAUST GAS TURBOCHARGER AND METHOD FOR THE OPERATION THEREOF
TURBOCOMPRESSEUR À SURALIMENTATION DE GAZ D'ÉCHAPPEMENT ET SON FONCTIONNEMENT

(30) Priorität: 16.04.2007 DE 102007017775
(43) Veröffentlichungstag der Anmeldung: 23.12.2009
(73) Patentinhaber: Continental Automotive GmbH, 30165 Hannover (DE)
(72) Erfinder: KAUFMANN, Andre, 93105 Tegernheim (DE); DETTMANN, Tobias, 19303 Rüterberg (DE)
(86) Internationale Anmeldenummer: PCT/EP2008/054193
(87) Internationale Veröffentlichungsnummer: WO 2008/125541

(56) Entgegenhaltungen:
- DE-A1- 3 302 186
- DE-A1- 10 041 806
- US-A- 6 073 447

## Beschreibung

Die Erfindung betrifft einen Abgasturbolader sowie ein Verfahren zum Betreiben eines solchen Turboladers.

Bei herkömmlichen, nicht aufgeladenen Brennkraftmaschinen wird beim Ansaugen von Luft ein Unterdruck im Ansaugtrakt erzeugt, der mit wachsender Drehzahl des Motors ansteigt und die theoretisch erreichbare Leistung des Motors begrenzt. Eine Möglichkeit, dem entgegenzuwirken und damit eine Leistungssteigerung zu erzielen, ist die Verwendung eines Abgasturboladers (ATL). Ein Abgasturbolader oder kurz Turbolader ist ein Aufladesystem für eine Brennkraftmaschine, mittels dem die Zylinder der Brennkraftmaschine mit einem erhöhten Ladedruck beaufschlagt werden.

Der detaillierte Aufbau und die Funktionsweise ist allgemein bekannt und beispielsweise beschrieben in der Druckschrift: "Aufladung von PKW DI Ottomotoren mit Abgasturboladern mit variabler Turbinengeometrie", Sep. 2006, Peter Schmalzl und wird daher nachfolgend nur kurz erläutert. Ein Turbolader besteht aus einer Abgasturbine im Abgasstrom (Abströmpfad), die über eine gemeinsame Welle mit einem Verdichter im Ansaugtrakt (Anströmpfad) verbunden ist. Die Turbine wird vom Abgasstrom des Motors in Rotation versetzt und treibt so den Verdichter an. Der Verdichter erhöht den Druck im Ansaugtrakt des Motors, sodass durch diese Verdichtung während des Ansaugtaktes eine größere Menge Luft in die Zylinder der Brennkraftmaschine gelang als bei einem herkömmlichen Saugmotor. Damit steht mehr Sauerstoff zur Verbrennung zur Verfügung. Durch den ansteigenden Mitteldruck des Motors wird das Drehmoment und die Leistungsabgabe merklich erhöht. Das Zuführen einer größeren Menge an Frischluft verbunden mit dem einlassseitigen Verdichtungsprozess nennt man Aufladen. Da die Energie für die Aufladung von der Turbine den schnell strömenden, sehr heißen Abgasen entnommen wird, erhöht sich der Gesamtwirkungsgrad der Brennkraftmaschine.

An die ATLs werden hohe Anforderungen gestellt. Dies sind vor allem die hohen Abgastemperaturen von bis über 1000°C und den je nach Drehzahlbereich völlig unterschiedlichen Gasmengen und die dadurch bedingten hohen maximalen Drehzahlen bis zu 400.000 Umdrehungen je Minute. Um den Einsatzbereich des Turboladers und das Ansprechverhalten zu verbessern werden u.a. mehrflutige Einlasskanäle wie beispielsweise das eines Doppelstromgehäuses verwendet. Eine derartige radiale Turbinenform ist beispielsweise aus der Druckschrift: "Aufladung von PKW DI Ottomotoren mit Abgasturboladern mit variabler Turbinengeometrie", Sep. 2006, von Peter Schmalzl bekannt. Bei der offenbarten radialen Turbine wird eine variable Turbinengeometrie (VTG) beispielsweise in Form von verstellbaren Leitschaufeln verwendet. Dabei sind die drehbaren Leitschaufeln konzentrisch gleichmäßig beabstandet um das Turbinenrad angeordnet. Nachteil einer derartigen Konstruktion ist, dass diese einen hohen konstruktiven Aufwand erfordert und die Zuverlässigkeit der Turbine verringert. Des Weiteren kommt es je nach Stellung der Leitschaufeln zu erhebliche Leistungsverlusten in der Turbine. Ferner wird insbesondere um das Ansprechverhalten im unteren Drehzahlbereich zu verbessern und ein so genanntes "Turboloch" möglichst zu unterdrücken, der Kanalquerschnitt des Turbineneinlasses relativ klein gewählt. Dies führt dazu, um die hohen Abgasströmen im oberen Drehzahlbereich bewältigen zu können, dass ein Bypass oder "wastegate" geöffnet werden muss. Hierdurch verrindert sich der Gesamtwirkungsgrad der Turbine.

Durch Dokument DE 100 41 806 A1 wird beispielsweise ein Turbolader vorgestellt, dessen Turbinen-Einslasskanal einen inneren und einen äußeren Spiralabschnitt aufweist, die durch eine dazwischen angeordnete Teilungswand geteilt sind. Die Teilungswand weist eine Vielzahl von Verbindungsabschnitten auf, die Fluidverbindungen zwischen den beiden Spiralabschnitten darstellen. Mit Hilfe eines Schaltventils im Bereich des Turbinen-Einlassanschlusses kann der Fluidstrom wahlweise den einzelnen Spiralabschnitten zugeleitet werden. Auch hier kommt es beim Überströmen des Abgasstromes von dem äußeren in den inneren Spiralbereich zu relativ hohen Verlusten.

Es ist die Aufgabe der vorliegenden Erfindung, die vorgenannten Nachteile zu verringern.

Erfindungsgemäß wird diese Aufgabe durch einen Turbolader mit den Merkmalen des Patentanspruch 1gelöst.

Demgemäß ist vorgesehen:

Ein Turbolader für ein oder in einem Kraftfahrzeug mit einem wenigstens teilweise um ein Turbinenrad ausgebildeten inneren ersten Einlasskanal und einen wenigstens teilweise um den ersten Einlasskanal ausgebildeten äußeren zweiten Einlasskanal bereitzustellen, wobei der Einlasskanal des Turbinengehäuses durch einen geschlossenen Mittelsteg am Turbineneinlass in den ersten und zweiten Einlasskanal unterteilt ist und im Anschluss an den geschlossenen Mittelsteg einzelne feststehende Gasleitschaufeln vorgesehen sind mit jeweils einer Öffnung (208) dazwischen. Zwischen den beiden Einlasskanälen entlang ihrer gemeinsamen Erstreckung sind eine Vielzahl von Öffnungen zum teilweisen Austausch des die Einlasskanäle durchströmenden Gasstroms ausgebildet. Die Gasleitschaufeln weisen im Querschnitt ein tragflächenartiges Profil auf, um einen Teil des im zweiten Einlasskanal fließenden Gasstroms in den ersten Einlasskanal zu leiten.

Die der vorliegenden Erfindung zu Grunde liegende Idee besteht darin, auf der Turbinenseite, das heißt im Abströmpfad eines Turboladers, Öffnungen bereitzustellen durch die ein Teil des Abgasstromes von dem äußeren Einlasskanal in den inneren Einlasskanal geleitet wird. Auf diese Weise wird es möglich, ohne konzentrisch um das Turbinenrad angeordnete bewegliche Leitschaufeln, eine an unterschiedliche Drehzahlen angepasste Gaszuführung für eine Turbine bereitzustellen. Das Auftreten eines Turboloches vor allem bei niedrigen Drehzahlen wird verringert. Ein weiterer Vorteil der erfindungsgemäβen Vorrichtung ist es, dass die Zuverlässigkeit der Turbine erhöht wird. Ein anderer Vorteil ist, dass der Abströmpfad auch für größere Gasmengen ausreichend dimensioniert werden kann und sich ein Bypass oder "wastegate" sich vermeiden lässt. Der Gesamtwirkungsgrad der Turbine wird erhöht.

Vorteilhafte Ausgestaltungen und Weiterbildungen der Erfindung ergeben sich aus den Unteransprüchen sowie aus der Beschreibung in Zusammenschau mit den Zeichnungen.

In einer typischen Ausgestaltung des Turboladers umschließt der erste Einlasskanal das Turbinenrad auf mehr als der Hälfte des Umfangs, wobei in einer bevorzugten Ausgestaltung der erste Einlasskanal mit dem zweiten Einlasskanal durch eine Vielzahl von Öffnungen verbunden ist.

In einer bevorzugten Ausgestaltung umschließt der zweite Einlasskanal das Turbinenrad in radialer Richtung in wenigstens einem Abschnitt unmittelbar, wobei sich in einer alternativen Ausgestaltung sich der Querschnitt der Einlasskanäle entlang des Umfanges des Turbinenrades verringert.

In einer besonders bevorzugten Ausgestaltung ist eine Gasmengenverteilvorrichtung vorgesehen, die turbineneinlassseitig eine Verteilung des Gasstromes zwischen den beiden Einlasskanälen bewirkt. Ein Vorteil der erfindungsgemäßen Vorrichtung ist es, dass durch die besondere Ausbildung der Einlasskanäle und der Gasmengenverteilvorrichtung die Größe der Einlasskanäle besonders wirkungsvoll auch für große Drehzahlbereiche ausreichend dimensioniert werden kann, ohne bei kleinen Gasmengenströmen das Ansprechverhalten der Turbine zu verschlechtern. Ein Bypass oder "wastegate" lässt sich damit vermeiden. Ein weiterer Vorteil ist, dass verstellbare Gasleitschaufeln entfallen. Damit erhöht sich sowohl der Gesamtwirkungsgrad als auch die Zuverlässigkeit der Turbine.

In einer bevorzugten Ausgestaltung ist die Gasmengenverteilvorrichtung als eine aktiv steuerbare Vorrichtung insbesondere als Aktuatorvorrichtung ausgebildet, wobei in einer weiteren Ausgestaltung die Aktuatorvorrichtung am Eingang des zweiflutigen Einlasskanals angeordnet ist.

In einer alternativen Ausgestaltung ist die Aktuatorvorrichtung an der Stirnseite des Mittelstegs zwischen dem ersten Einlasskanal und dem zweiten Einlasskanal angeordnet.

In einer weiteren Ausgestaltung ist die Gasmengenverteilvorrichtung als eine passive Vorrichtung ausgebildet, die wenigstens eine Strömungsbarriere umfasst.

In einer besonders vorteilhaften Ausführungsform ist die Strömungsbarriere unmittelbar vor dem Beginn des zweikanaligen Einlassbereichs angeordnet.

In einer weiteren Ausgestaltungsform weist die Strömungsbarriere eine Höhe Z und einen Abstand x zum Mittelsteg aufweist.

In einem Verfahren zum Betreiben eines erfindungsgemäßen Turboladers wird mittels der Gasmengenverteilvorrichtung wenigstens teilweise eine Verteilung des Gasstroms zwischen den beiden Einlasskanälen bewirkt.

In einer besonders bevorzugten Ausgestaltung wird in einer ersten Betriebsart bei geringen Gasmengenströmen der zweite Einlasskanal mittels der Gasmengenverteilungsvorrichtung mit einer im Vergleich zu einer zweiten Betriebsart mit großen Gasmengenströmen geringeren Gasmenge beaufschlagt.

In einer alternativen Ausgestaltung wird in der ersten Betriebsart bei geringen Gasmengenströmen der zweite Einlasskanal mittels der Gasmengenverteilungsvorrichtung verschlossen und bei der zweiten Betriebsart bei großen Gasmengenströmen der zweite Einlasskanal geöffnet.

Die Erfindung wird nachfolgend an Hand der in den Figuren der Zeichnungen angegebenen Ausführungsbeispiele näher erläutert. Es zeigen dabei:
- Fig.1: einen Aufriss eines Turboladers mit einem erfindungs- gemäßen Einlasskanal;
- Fig.2: eine schematische Draufsicht auf das Turbinengehäuse mit erfindungsgemäßen Einlasskanälen und einer aktiven Gasmengenverteilvorrichtung;
- Fig.3: eine schematische Draufsicht auf das Turbinengehäuse mit einer passiven Gasmengenverteilvorrichtung;
- Fig.4: eine schematische Draufsicht auf das Turbinengehäuse mit einer aktiven und passiven Gasmengenverteilvor- richtung;
- Fig.5: eine schematische Darstellung einer Doppelstromturbine gemäß dem Stand der Technik;

In den Figuren sind gleiche und funktionsgleiche Elemente, Merkmale und Größen - sofern nichts Abweichendes angegeben ist - mit denselben Bezugszeichen versehen.

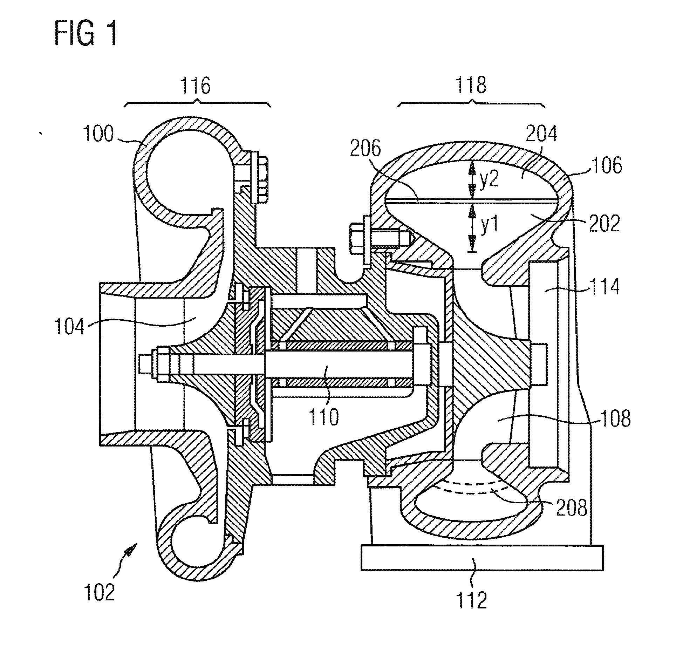

Fig.1 zeigt einen Aufriss eines Abgasturboladers 102 mit einer erfindungsgemäßen Turbine 118 und einem Verdichter 116. Innerhalb eines Turbinengehäuses 106 der Turbine 118 ist eine Turbinenrad 108 drehbar gelagert und mit einem Ende einer Welle 110 verbunden. Innerhalb des Verdichtergehäuses 100 des Verdichters 116 ist eine Verdichterrad 104 ebenfalls drehbar gelagert und mit dem anderen Ende der Welle 110 verbunden. Über einen Turbineneinlass 112 wird heißes Abgas von einem hier nicht dargestellten Verbrennungsmotor in die Turbine 118 eingelassen, wodurch das Turbinerad 118 in Drehung versetzt wird. Der Abgasstrom verlässt die Turbine 118 durch einen Turbinenauslass 114. Über die Welle 110, die das Turbinerad 108 an das Verdichterrad 104 koppelt, treibt die Turbine 118 den Verdichter 116 an.

Ausgehend von dem Turbineneinlass 112 teilt sich das Turbinengehäuse 106 in einen ersten inneren Einlasskanal 202 und einen zweiten äußeren Einlasskanal 204 auf. Zwischen den beiden Einlasskanälen 202, 204 ist ein Mittelsteg 206 ausgebildet. Das Größenverhältnis der lichten Weiten der Einlasskanäle 202, 204 und die Lage des Mittelstegs 206 bestimmt sich aus dem Verhältnis der beiden Abstände y1/y2. Durch den Mittelsteg 206 wird der Abgasstrom turbineneingangsseitig in zwei Teile unterteilt. Der Mittelsteg 206 weist nach einer kurzen Wegstrecke Öffnungen 208 durch die der Abgasstrom von dem äußeren Einlasskanal 204 zum inneren Einlasskanal 202 geleitet werden kann. Durch die schneckenförmige Anordnung der Einlasskanäle 202, 204 wird der Gasstrom auf des Turbinenrad 108 geleitet. Innerhalb einer Umdrehung nimmt die lichte Weite der beiden Einlasskanäle 202, 204 nahezu auf Null ab.

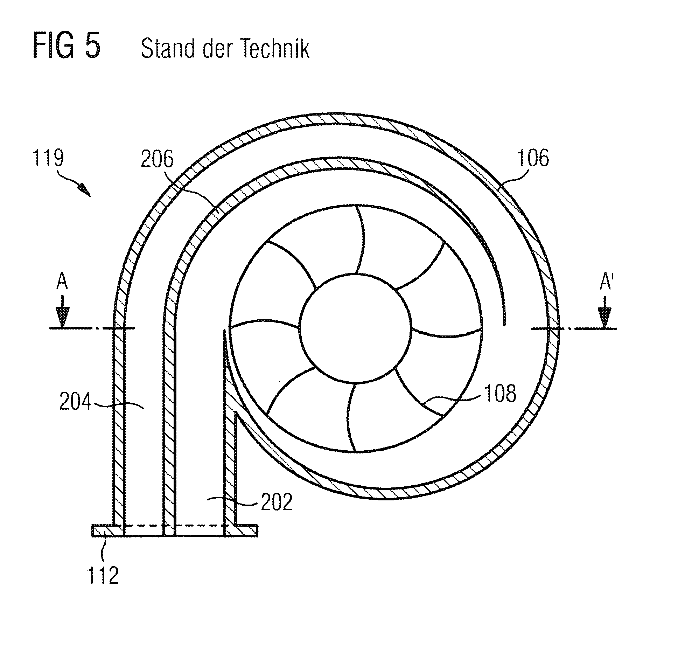

Fig.5 zeigt eine schematische Draufsicht einer Doppelstromturbine 119 gemäß dem Stand der Technik. Das Turbinengehäuse 106 teilt sich in den inneren Einlasskanal 202 und in den äußeren Einlasskanal 204. Beide Einlasskanäle 202, 204 sind durch einen geschlossenen Mittelsteg 206 entlang ihrer gesamten Erstreckung gegeneinander getrennt. Die lichte Weite des inneren Einlasskanals 202 nimmt innerhalb eines ersten Halbkreises ausgehend im Uhrzeigersinn von der Linie A zur Line A' fast vollständig auf Null ab. Entlang dieser Strecke bleibt die lichte Weite des äußeren Einlasskanals 204 nahezu konstant. Nachfolgend nimmt im Uhrzeigersinn ausgehend von der Linie A' hin zu Linie A die lichte Weite des äußeren Kanals 204 gleichfalls nahezu vollständig auf Null ab.

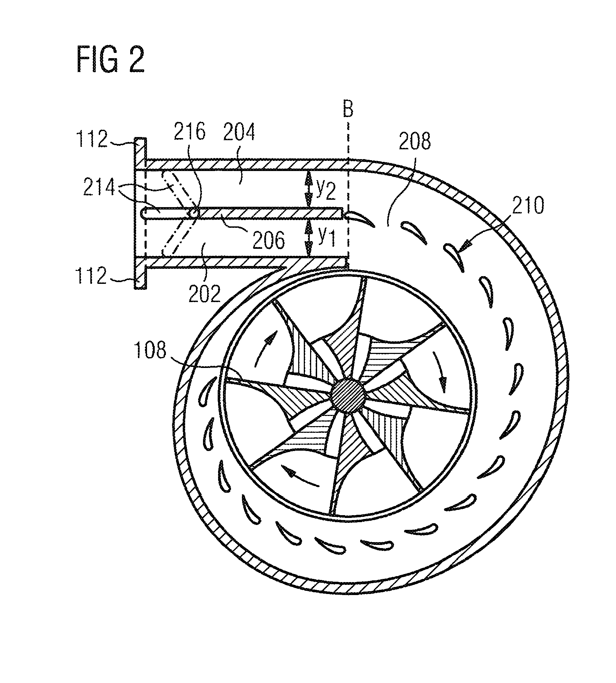

Die Fig. 2 zeigt eine schematische Draufsicht auf das Turbinengehäuse 106 mit zwei erfindungsgemäßen Einlasskanäle 202, 204. Gegenüber der Doppelstromturbine aus der Fig. 5 wickeln sich beide Einlasskanäle 202, 204 mit einer abnehmenden lichten Weite im Uhrzeigersinn spiralförmig um das Turbinenrad 108. Durch den Mittelsteg 206 am Turbineneinlass 112 wird der Einlasskanal in den ersten inneren Einlasskanal 202 und einen zweiten äußeren Einlasskanal 204 unterteilt. Das Größenverhältnis der Einlasskanäle 202, 204 und die Lage des Mittelstegs 206 bestimmt sich aus dem Verhältnis der beiden Abstände y1/y2. Vorzugsweise geht der geschlossene Mittelsteg 206 ab einer Linie B in eine Vielzahl von Öffnungen 208 und einzelnen feststehende Gasleitschaufeln 210 unterteilte offene Struktur über. Das Profil der einzelnen Gasleitschaufeln 210 ist derart ausgeformt, dass Gas aus dem äußeren Kanal 204 durch die Öffnungen 208 in den inneren Kanal 202 geleitet wird. Die einzelnen Gasleitschaufeln 210 weisen dabei im Querschnitt vorzugsweise ein tragflächenflügelartiges Profil auf. Dabei lässt sich durch die Ausformung der Gasleitschaufeln 210 die Höhe der Einströmung von dem äußeren Einlasskanal 204 in den inneren Einlasskanal 202 bestimmen. Durch das tragflächenartige Profil der Gasleitschaufeln 210 wird bei hohen Anströmgeschwindigkeiten des Gases an der zum inneren Kanal liegende Unterseite der Gasleitschaufeln 210 ein Unterdruck erzeugt. Die Höhe des erzeugten Unterdruckes ist durch das Flügelprofil des Gasleitschaufelns 210 bestimmbar. Zusammen mit der Winkelstellung der einzelnen Gasleitschaufeln 210 lässt sich damit bei einer bestimmten Strömungsgeschwindigkeit die Menge des Gases das von dem äußeren Einlasskanal 204 in den inneren Einlasskanal 202 einströmt, bestimmen.

In einer weiteren Ausführungsform wird, die ebenfalls in der Fig.2 dargestellt ist, der Gasstrom kurz nach dem Turbineneinlass 112 mittels einer aktiven Gasmengenverteilvorrichtung 212 zwischen dem ersten inneren Einlasskanal 202 und dem zweiten äußeren Einlasskanal 204 verteilt. Hierzu weist die Gasmengenverteilvorrichtung 212 eine Klappe 214 auf, durch die sich einer der beiden Einlasskanäle 202, 204 verschließen lässt. Die Klappe 214 lässt sich durch einen Aktuator 216 steuern. Vorzugsweise verbleibt in den niedrigen Drehzahlbereichen d.h. bei verhältnismäßig geringen Gasmengenströme der zweite äußere Einlasskanal 204 verschlossen. Im hohen Drehzahlbereich d.h. bei hohen Gasmengenströmen befindet sich die Klappe 214 in einer Mittelstellung, sodass beide Einlasskanäle 202, 204 mit Gas durchströmt werden.

Ein Vorteil der erfindungsgemäßen Vorrichtung ist es, dass. durch die besondere Ausbildung der Einlasskanäle und der Gasmengenverteilvorrichtung die Größe des Einlasskanals ausreichend auch für große Drehzahlbereiche dimensioniert werden kann, ohne dass bei kleinen Gasmengenströmen das Ansprechverhalten der Turbine verschlechtert wird. Ein Bypass oder "wastegate" lässt sich folglich vermeiden. Ein weiterer Vorteil ist, dass eine Vielzahl von beweglichen Gasleitschaufeln entfallen. Damit erhöht sich neben dem Gesamtwirkungsgrad der Turbine auch die Zuverlässigkeit.

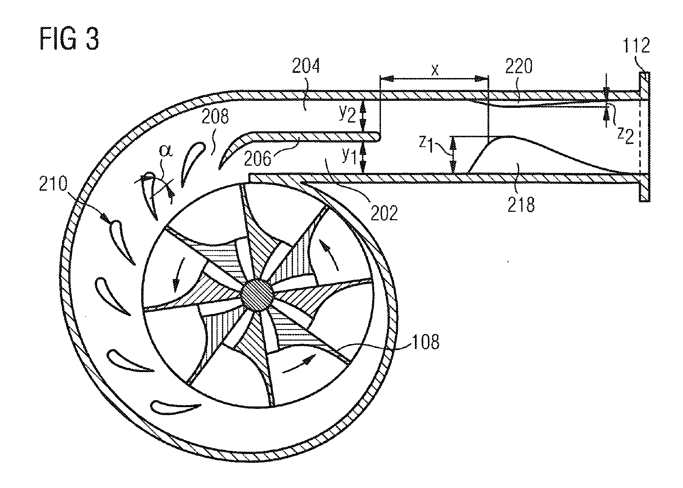

Fig. 3 zeigt eine schematische Draufsicht einer Turbine gemäß einer anderen erfindungsgemäßen Ausführungsform. Auch hier wird durch den Mittelsteg 206 am Turbineneinlass 112 der Einlasskanal in den ersten inneren Einlasskanal 202 und einen zweiten äußeren Einlasskanal 204 geteilt. Das Größenverhältnis der Einlasskanäle 202, 204 und die Lage des Mittelstegs 206 bestimmt sich wiederum aus dem Verhältnis der beiden Abstände y1/ Y2. Die dadurch erreichte Aufteilung des Gasstromes ist in erster Näherung nicht von der Geschwindigkeit des Gasstromes abhängig. Jedoch wird durch den stark tragflächenflügelartigen Querschnitt der Gasleitschaufeln 210 und deren relativ großen Anstellwinkel a der Gasstrom aus dem zweiten äußeren Einlasskanal in besonders hohem Maße in den ersten inneren Einlasskanal geleitet. Hierdurch erfährt der Gasstrom eine besonders hohe Geschwindigkeitskomponente in Richtung der Turbinendrehachse. Verstärkt wird dies durch die besonders große Abnahme der lichten Weite der Einlasskanäle 202, 204 entlang der spiralförmigen Erstreckung. Damit wir das Turbinerad 108 auf einer kurzen radialen Strecke mit dem gesamten Gasstrom beaufschlagt.

In einer weiteren Ausführungsform, die ebenfalls in der Fig.3 dargestellt ist, wird der Gasstrom kurz nach dem Turbineneinlass 112 mittels einer passiven Gasmengenverteilvorrichtung 212 zwischen dem ersten inneren Einlasskanal 202 und dem zweiten äußeren Einlasskanal 204 verteilt. Hierzu umfasst die Gasmengenverteilvorrichtung wenigstens eine Strömungsbarriere 218, 220, die vorzugsweise an der Seite des inneren Einlasskanals 202 angeordnet ist, und eine geschwindigkeitsabhängige bzw. drehzahlabhängige Verteilung des Gasstroms zwischen den beiden Einlasskanälen 202, 204 bewirkt. Hierzu weisen die Strömungsbarriere 218, 220 eine Höhe Z1 bzw. Z2 auf, und sind mit einem Abstand X vor dem Mittelssteg 206 angeordnet. Untersuchungen der Anmelderin haben gezeigt, dass neben der geometrischen Form der Barrieren und dem Abstand X, insbesondere die Höhen Z1 bzw. Z2 zusammen mit dem Verhältnis von y1 zu y2 einen wesentlichen Einfluss auf die strömungsabhängige Verteilung des Gasflusses ausüben. Es zeigte sich, dass bei geringen Gasströmgeschwindigkeiten sich an den Strömungsbarrieren 216, 218 eine laminare Strömung ausbildet. Damit wird die Aufteilung des Gasstroms im Wesentlichen durch das Größenverhältnis der beiden Abstände y1 und y2 bewirkt. Bei höheren Gasgeschwindigkeiten kommt es zu einer Ablösung des Flusses an den Kanten der Strömungsbarrieren. Durch die Höhen Z1 und Z2 der Strömungsbarrieren 218, 220 lässt sich eine unterschiedliche Beaufschlagung der beiden Einlasskanäle 202, 204 erzielen. Untersuchungen der Anmelderin haben gezeigt, dass es je nach Dimensionierung der Einlasskanäle und des Verhältnisses von y1/y2 eine einzige Strömungsbarriere 218 ausreicht, um eine gewünschte Verteilung des Gasstromes zu erzielen. Ein Vorteil der erfindungsgemäßen Vorrichtung ist es, dass eine Verteilung des Gasstroms in Abhängigkeit des Drehzahlbereiches ohne bewegliche Elemente gelingt. Hierdurch wird in besonders vorteilhafter Weise die Zuverlässigkeit der Turbine in besonderem Maße erhöht und das Ansprechverhalten der Turbine im unteren Drehzahlbereich bei der vorzugsweise eine laminaren Strömung gegeben ist, verbessert.

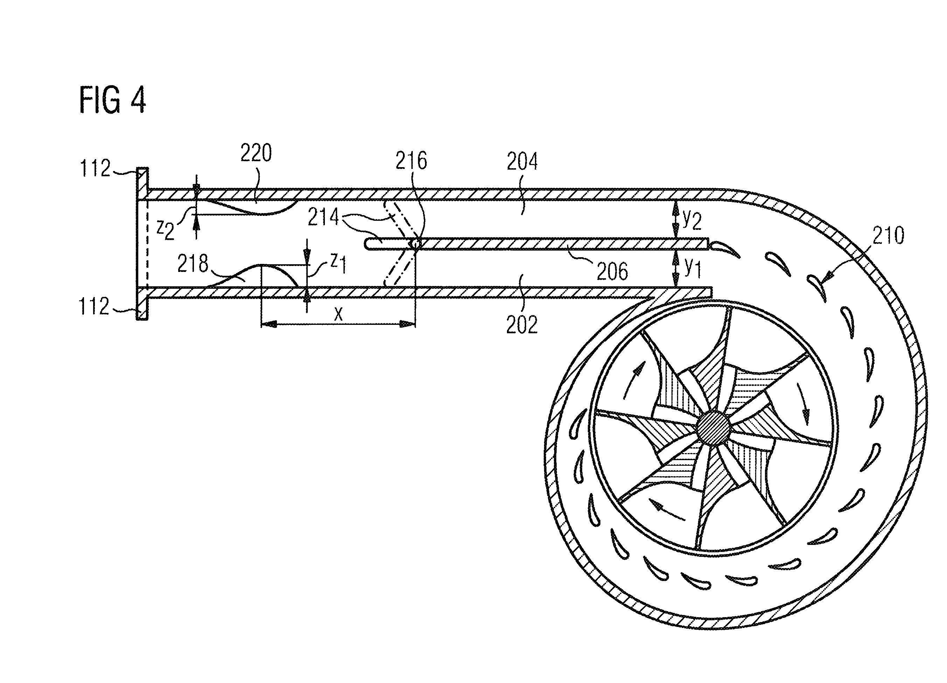

Fig. 4 zeigt eine schematische Draufsicht einer Turbine gemäß einer weiteren erfindungsgemäßen Ausführungsform. In der dargestellten bevorzugten Ausführung wird der Gasstrom kurz nach dem Turbineneinlass 112 mittels einer Gasmengenverteilvorrichtung 212 die sowohl eine aktive Verteilvorrichtung 214, 216, entsprechend der in der Fig.2 gezeigten Ausführungsform aufweist, als auch eine passive Vorrichtung 218, 220, entsprechend der in der Fig.3 dargstellten Ausführungsform aufweist, durchgeführt. Es sei darauf hingewiesen, dass bei der passiven Vorrichtung es hinreichend sein kann, nur eine untere Strömungsbarriere 218 auszubilden. Durch die Kombination von aktiver und passiver Gasmengenverteilvorrichtung und dem Verhältnis der Abstände Y1, Y2, die die Lage des Mittelsteges 206 und damit Größenverhältnis von innerem Einlasskanal 202 und äu0erem Einlasskanal 204 bestimmen, ist es möglich die Gasmenge je nach Drehzahlverhältnis wirkungsvoll zu verteilen. Hierdurch lässt sich der Einsatzbereich der Turbine weiter erhöhen. Untersuchungen der Anmelderin haben gezeigt, dass sich der durch die Zuverlässigkeit und Wirkungsgrad der Turbine besonders steigern lassen. Bei hohen Drehzahlbereichen lässt sich aufgrund der ausreichenden Dimensionierung der Einlasskanäle der gesamte Gasstrom durch die Turbine leiten. Die Ausbildung eines "wastegate" kann entfallen.

## Patentansprüche

1. Turbolader für ein ein Kraftfahrzeug mit einem wenigstens teilweise um ein Turbinenrad (108) ausgebildeten inneren ersten Einlasskanal (202) und einen wenigstens teilweise um den ersten Einlasskanal (202) ausgebildeten äußeren zweiten Einlasskanal (204), wobei der Einlasskanal des Turbinengehäuses (106) durch einen geschlossenen Mittelsteg (206) am Turbineneinlass (112) in den ersten und zweiten Einlasskanal (202, 204) unterteilt ist, wobei im Anschluss an den geschlossenen Mittelsteg (206) einzelne feststehende Gasleitschaufeln (210) vorgesehen sind mit jeweils einer Öffnung (208) dazwischen, wobei zwischen den beiden Einlasskanälen (202, 204) entlang ihrer gemeinsamen Erstreckung die Vielzahl von Öffnungen (208) zum teilweisen Austausch des die Einlasskanäle (202, 204) durchströmenden Gasstroms ausgebildet sind, **dadurch gekennzeichnet, dass** die Gasleitschaufeln (210) im Querschnitt ein tragflächenartiges Profil aufweisen, um einen Teil des im zweiten Einlasskanal (204) fließenden Gasstroms in den ersten Einlasskanal (202) zu leiten.

2. Turbolader nach Anspruch 1,
**dadurch gekennzeichnet, dass**
der erste Einlasskanal (202)das Turbinenrad (108)auf mehr als der Hälfte des Umfangs umschließt.

3. Turbolader nach Anspruch 1 oder Anspruch 2,
**dadurch gekennzeichnet, dass**
der erste Einlasskanal (202) mit dem zweiten Einlasskanal (204) durch die Vielzahl von Öffnungen (208) verbunden ist.

4. Turbolader nach einem der Ansprüche 1 bis 3,
**dadurch gekennzeichnet, dass**
wenigstens eine der Öffnungen (208) als Durchlass zwischen zwei als Gasleitschaufeln (210) ausgebildeten Stegen ausgebildet ist.

5. Turbolader nach einem der Ansprüche 1 bis 4,
**dadurch gekennzeichnet, dass**
der zweite Einlasskanal (204) das Turbinenrad (108) in radialer Richtung in wenigstens einem Abschnitt unmittelbar umschließt.

6. Turbolader nach einem der Ansprüche 1 bis 5,
**dadurch gekennzeichnet, dass**
dass sich der Querschnitt der Einlasskanäle (202, 204) entlang des Umfanges des Turbinenrades (108) verringert.

7. Turbolader nach einem der Ansprüche 1 bis 6,
**dadurch gekennzeichnet, dass**
eine Gasmengenverteilvorrichtung vorgesehen ist, die turbineneinlassseitig eine Verteilung des Gasstromes zwischen den beiden Einlasskanälen (202, 204) bewirkt.

8. Turbolader nach Anspruch 6,
**dadurch gekennzeichnet,**
die Gasmengenverteilvorrichtung als eine aktiv steuerbare Vorrichtung insbesondere als Aktuatorvorrichtung (216) ausgebildet ist.

9. Turbolader nach Anspruch 7 oder Anspruch 8,
**dadurch gekennzeichnet, dass**
die Aktuatorvorrichtung (216) am Eingang des zweiflutigen Einlasskanals angeordnet ist.

10. Turbolader nach einen der Ansprüche 7 bis 9,
**dadurch gekennzeichnet, dass**
die Aktuatorvorrichtung (216) an der Stirnseite des Mittelstegs (206) zwischen dem ersten Einlasskanal (202) und dem zweiten Einlasskanal (204) angeordnet ist.

11. Turbolader nach Anspruch 7,
**dadurch gekennzeichnet, dass**
die Gasmengenverteilvorrichtung als eine passive Vorrichtung ausgebildet ist, die wenigstens eine Strömungsbarriere (218, 220) umfasst.

12. Turbolader nach Anspruch 11,
**dadurch gekennzeichnet, dass**
die Strömungsbarriere (218, 220)unmittelbar vor dem Beginn des zweikanaligen Einlassbereichs angeordnet ist.

13. Turbolader nach Anspruch 11 oder Anspruch 12,
**dadurch gekennzeichnet, dass**
die Strömungsbarriere (218, 220) eine Höhe Z und einen Abstand X zum Mittelssteg (206) aufweist.

## Claims

1. Turbocharger for a motor vehicle having an inner first inlet channel (202) embodied at least partially around a turbine wheel (108) and an outer second inlet channel (204) embodied at least partially around the first inlet channel (202), with the inlet channel of the turbine housing (106) being subdivided into the first and second inlet channel (202, 204) by means of a closed centre bar (206) on the turbine inlet (112), with individual stationary gas guide vanes (210) being provided in connection with the closed centre bar (206), each of which has an opening (208) therebetween, with the plurality of openings (208) for partially exchanging the gas flow flowing through the inlet channels (202, 204) being embodied between the two inlet channels (202, 204) along their shared extent, **characterised in that** cross-sectionally the gas guide vanes (210) have a wing-type profile in order to route part of the gas flow flowing in the second inlet channel (204) into the first inlet channel (202).

2. Turbocharger according to claim 1,
**characterised in that**
the first inlet channel (202) surrounds more than half of the circumference of the turbine wheel (108).

3. Turbocharger according to claim 1 or claim 2,
**characterised in that**
the first inlet channel (202) is connected to the second inlet channel (204) by the plurality of openings (208).

4. Turbocharger according to one of claims 1 to 3,
**characterised in that**
at least one of the openings (208) is embodied as a passage between two bars embodied as gas guide vanes (210).

5. Turbocharger according to one of claims 1 to 4,
**characterised in that**
the second inlet channel (204) directly surrounds the turbine wheel (108) in the radial direction at least in one section.

6. Turbocharger according to one of claims 1 to 5,
**characterised in that**
the cross-section of the inlet channels (202, 204) reduces along the circumference of the turbine wheel (108).

7. Turbocharger according to one of claims 1 to 6,
**characterised in that**
a gas quantity distribution device is provided, which effects a distribution of the gas flow between the two inlet channels (202, 204) on the gas inlet side.

8. Turbocharger according to claim 6,
**characterised in that**
the gas quantity distribution device is embodied as an actively controllable device, in particular as an actuator device (216).

9. Turbocharger according to claim 7 or claim 8,
**characterised in that**
the actuator device (216) is arranged at the entry of the double-flow inlet channel.

10. Turbocharger according to one of claims 7 to 9,
**characterised in that**
the actuator device (216) is arranged on the front side of the centre bar (206) between the first inlet channel (202) and the second inlet channel (204).

11. Turbocharger according to claim 7,
**characterised in that**
the gas quantity distribution device is embodied as a passive device, which includes at least one flow barrier (218, 220).

12. Turbocharger according to claim 11,
**characterised in that**
the flow barrier (218, 220) is arranged directly in front of the start of the two-channel inlet area.

13. Turbocharger according to claim 11 or claim 12,
**characterised in that**
the flow barrier (218, 220) has a height Z and a distance X from the centre bar (206).

## Revendications

1. Turbocompresseur pour un véhicule automobile avec un premier canal d'admission interne (202) formé au moins en partie autour d'une roue de turbine (108) et un second canal d'admission externe (204) formé au moins en partie autour du premier canal d'admission (202), dans lequel le canal d'admission du boîtier de turbine (106) est subdivisé par une nervure centrale fermée (206) sur l'admission de turbine (112) en un premier et un second canal d'admission (202, 204), dans lequel, à la suite de la nervure centrale fermée (206), il est prévu des pales directrices de gaz (210) individuelles, fixes, ayant respectivement une ouverture (208) entre elles, la pluralité d'ouvertures (208) étant formée entre les deux canaux d'admission (202, 204) le long de leur extension commune pour l'échange partiel du flux de gaz traversant les canaux d'admission (202, 204), **caractérisé en ce que** les pales directrices de gaz (210) présentent, en section transversale, un profil en forme de face portante pour acheminer une partie du flux de gaz s'écoulant dans le second canal d'admission (204) dans le premier canal d'admission (202).

2. Turbocompresseur selon la revendication 1,
**caractérisé en ce que**
le premier canal d'admission (202) entoure la roue de turbine (108) sur plus de la moitié de la circonférence.

3. Turbocompresseur selon la revendication 1 ou 2,
**caractérisé en ce que**
le premier canal d'admission (202) est raccordé au second canal d'admission (204) par la pluralité d'ouvertures (208).

4. Turbocompresseur selon l'une quelconque des revendications 1 à 3,
**caractérisé en ce que**
au moins l'une des ouvertures (208) se présente sous la forme d'un passage entre deux nervures conformées en pales directrices de gaz (210).

5. Turbocompresseur selon l'une quelconque des revendications 1 à 4,
**caractérisé en ce que**
le second canal d'admission (204) entoure la roue de turbine (108) dans la direction radiale directement dans au moins une section.

6. Turbocompresseur selon l'une quelconque des revendications 1 à 5,
**caractérisé en ce que**
la section transversale des canaux d'admission (202, 204) diminue le long de la circonférence de la roue de turbine (108).

7. Turbocompresseur selon l'une quelconque des revendications 1 à 6,
**caractérisé en ce que**
il est prévu un dispositif de distribution de quantité de gaz qui induit, côté admission de turbine, une distribution du flux de gaz entre les deux canaux d'admission (202, 204).

8. Turbocompresseur selon la revendication 6,
**caractérisé en ce que**
le dispositif de distribution de quantité de gaz se présente sous la forme d'un dispositif à commande active, en particulier sous la forme d'un dispositif d'actionnement (216).

9. Turbocompresseur selon la revendication 7 ou 8,
**caractérisé en ce que**
le dispositif d'actionnement (216) est agencé à l'entrée du canal d'admission à double écoulement.

10. Turbocompresseur selon l'une quelconque des revendications 7 à 9,
**caractérisé en ce que**
le dispositif d'actionnement (216) est agencé sur le côté frontal de la nervure centrale (206) entre le premier canal d'admission (202) et le second canal d'admission (204).

11. Turbocompresseur selon la revendication 7,
**caractérisé en ce que**
le dispositif de distribution de quantité de gaz se présente sous la forme d'un dispositif passif, qui comprend au moins une barrière d'écoulement (218, 220).

12. Turbocompresseur selon la revendication 11,
**caractérisé en ce que**
la barrière d'écoulement (218, 220) est agencée juste avant le début de la zone d'admission à deux canaux.

13. Turbocompresseur selon la revendication 11 ou 12,
**caractérisé en ce que**
la barrière d'écoulement (218, 220) a une hauteur Z et une distance X par rapport à la nervure centrale (206).
